# EUROPÄISCHE PATENTANMELDUNG

(11) **EP 3 598 251 A1**
(43) Veröffentlichungstag der Anmeldung: **22.01.2020**
(21) Anmeldenummer: 18184760.9
(22) Anmeldetag: 20.07.2018
(51) Int. Cl.: G05B 19/042, G06F 9/46

(54) **VERFAHREN UND ANORDNUNG ZUR VERWALTUNG EINER VARIABLEN FÜR EINE INDUSTRIELLE AUTOMATISIERUNGSANORDNUNG**

(71) Anmelder: Siemens Aktiengesellschaft, 80333 München (DE)
(72) Erfinder: Herberth, Harald, 90522 Oberasbach (DE); Strobel, Holger, 90556 Steinbach (DE)

(57) **Zusammenfassung**

Die Erfindung betrifft ein Verfahren und eine Anordnung zur Verwaltung einer Variablen für eine industrielle Automatisierungsanordnung, insbesondere für ein industrielles Bedien- und Beobachtungssystem, wobei die Automatisierungsanordnung eine Mehrzahl lokaler Einheiten (SCADA1, SCADA2, session1, session2, SCR1, SCR2, FP1, FP2), insbesondere Bediengeräte, Beobachtungsgeräte, Bedienbilder und Bedienelemente aufweist, wobei "Tags" genannte Variablen (GT1, ..., GT3) eines ersten globalen Typs verwendet werden, und wobei diese Variablen (GT1, ..., GT3) des ersten globalen Typs global für alle lokalen Einheiten (SCADA1, SCADA2, session1, session2, SCR1, SCR2, FP1, FP2) definiert sind und für alle lokalen Einheiten (SCADA1, SCADA2, session1, session2, SCR1, SCR2, FP1, FP2) jeweils denselben Wert aufweisen. Dabei wird eine Variable (LT1, ..., LT4) eines zweiten lokalen Typs, also lokale "Tags", definiert, wobei diese Variable (LT1, ..., LT4) des zweiten lokalen Typs global für alle lokalen Einheiten (SCADA1, SCADA2, session1, session2, SCR1, SCR2, FP1, FP2) definiert wird und für einige oder alle lokalen Einheiten (SCADA1, SCADA2, session1, session2, SCR1, SCR2, FP1, FP2) jeweils separate Werte aufweisen kann. Mit einer solchen Anordnung kann ein Projektierer oder Programmierer somit in der ihm bekannten "Welt" der "Tags" weiterarbeiten und die Benutzeroberflächen durch den Einsatz von "Tags" erstellen, anstatt eine alternative Erstellung der Lösung über den aufwendigen Einsatz von Skripten oder dgl. vornehmen zu müssen. Gleichzeitig ist es aber möglich, in verschiedenen lokalen Einheiten unterschiedliche Werte oder Zustände einer solchen Variablen (LT1, ..., LT4) des zweiten Typs zu haben.

## Beschreibung

Die Erfindung betrifft ein Verfahren zur Verwaltung einer Variablen für eine industrielle Automatisierungsanordnung gemäß dem Oberbegriff des Patentanspruchs 1 und eine industrielle Automatisierungsanordnung mit einer Variablen gemäß dem Oberbegriff des Patentanspruchs 9.

In industriellen Automatisierungsanordnungen werden Daten zwischen verschiedenen lokalen Einheiten ausgetauscht. Dies gilt insbesondere für den Datenaustausch auf der Ebene der Bedien- und Beobachtungsgeräte (Bedien- und Beobachtungsebene), mit den Bedien- und Beobachtungsgeräten (HMI-Geräte und HMI-Systeme; HMI = Human Machine Interface), SCADA-Systemen (SCADA = Supervisory Control and Data Aquisition), MES-Systemen (MES = Manufacturing Execution System) und dergleichen, aber auch für logische Untereinheiten in den HMI/SCADA-Geräten, beispielsweise für einzelne Bedienbilder "Screens") von HMI-Geräten, Technologie-Geräte-Visualisierungen (sogenannte Faceplates), und andere lokale Einheiten. Die Datenhaltung und der Datenaustausch zwischen diesen lokalen Einheiten geschieht üblicherweise mit Hilfe sogenannter "Tags", das sind global definierte Variablen, die für den Verbund der HMI/SCADA-Geräte systemweit gültig sind und die systemweit denselben Wert aufweisen. Dabei ist mit Wert nicht unbedingt ein einzelnes "Datum" gemeint, sondern der Begriff Wert kann sich in diesem Zusammenhang auch auf den Inhalt komplexer Datenstrukturen, Zeichenketten, Arrays und anderer Datentypen beziehen. Somit sind Tags also ein zentrales Element der genannten Systeme und derer lokaler Einheiten.

Wie gesagt, haben Tags einen Datentyp, der beispielsweise elementar ist (z.B. integer, float, stream) oder strukturiert (z.B. array, struct) sein kann. Sogenannte IO-Tags repräsentieren einen Wert in der physikalischen Welt (z.B. Temperaturwert eines Sensors, Drehzahl eines Motors, Zustand einer Lichtschranke, Zustand eines Ventils, ...), sind also beispielsweise mit dem Zustand eines Sensors oder eines Aktors einer angeschlossenen Speicherprogrammierbaren Steuerung (PLC) fest verknüpft. Andere, sogenannte "Memory Tags" repräsentieren einen Wert einer durch Berechnung abgeleiteten oder nur intern im HMI/SCADA-System verwendeten Funktion. Dabei sind Tags zentral und global, d.h., dass alle Verwender mit demselben Wert arbeiten. Wird dieser Wert durch eine Aktion, beispielsweise eine Zuweisung, verändert, so ist diese Wert-änderung für alle anderen Verwender unmittelbar "sichtbar" und wirksam, d.h., dass dieser Wert an allen Verwendungsstellen des Tags sofort gültig ist. Tags sind wesentlich darin, dass sie mit den meisten Elementen einer Benutzeroberfläche (UI = User Interface) eines HMI/SCADA-Systems oder anderer Systeme verbunden werden können, so dass ein Wert eines Tags direkt visualisiert werden kann oder - im Falle der Verknüpfung mit einem HMI-Eingabemittel (z.B. Soft-Button, Slider oder andere "Controls") - Manipulationen an Tags sofort in eine Aktion für einen Aktor etc. münden können.

Das User Interface (UI) eines HMI/SCADA-Systems oder anderer Systeme (z. B. HMI-Geräte etc.) wird meist durch sogenannte Bedienbilder ("Screens") gebildet. Diese Bedienbilder werden in der Regel projektiert, d.h., dass diese vor der Inbetriebnahme eines Systems bereits erstellt oder vorkonfiguriert werden. Wiederverwendbare UI-Repräsentanten bestimmter im Prozess vorkommender Elemente (z.B. Pumpen, Ventile, Kessel) werden üblicherweise Faceplates genannt. Das Faceplate stellt damit ähnlich einer aus der Programmierung bekannten Klasse eine Konstruktionsvorschrift dar, die immer wieder verwendet werden kann, um in einem Bedienbild unterschiedliche Instanzen dieses Elementes zu erzeugen. So kann beispielsweise ein Faceplate eines Kessels einen solchen Kessel symbolisch oder schematisch darstellen, wobei der Füllstand des Kessels zur Laufzeit eines Systems dann entsprechend in diesem Faceplate visualisiert wird, beispielsweise durch einen Füllstands-Balken, eine bestimmte Färbung oder dergleichen.

Die globale Eigenschaft eines Tags ist eine charakteristische Eigenschaft von SCADA-Systemen, da alle Nutzer des SCADA-Systems (oder vergleichbarer Systeme) dieselbe physikalische Welt und denselben Prozess bearbeiten. Im Beispiel des Kessels, dessen Füllstand visualisiert wird, ist dies auch logisch, denn unabhängig davon, auf wie vielen Bedienoberflächen derselbe Kessel dargestellt wird, muss der Füllstand überall gleich angezeigt werden. Somit wird die Füllstandsanzeige in den Faceplates jeweils mit einem zentralen, globalen Tag, dessen Wert der Füllstand ist, verknüpft. Bei einer Veränderung des Wertes, was beispielsweise durch die Zuweisung eines aktualisierten Sensorwertes zu dem globalen Tag erfolgt, ändern sich dann synchron alle Füllstandsanzeigen, die mit diesem Tag verknüpft sind.

In manchen Anwendungsfällen ist jedoch diese zentrale, globale Eigenschaft eher störend. Dies kommt insbesondere dann vor, wenn ein Benutzer für ihn spezifische Informationen erhalten soll oder spezifisch für den Benutzer verwaltet wird. Üblicherweise verwenden die gebräuchlichen SCADA-Systeme für diese Informationen ebenfalls Tags, welche meist "System-Tags" genannt werden. System-Tags können auch global sein, wenn sie sich auf Informationen beziehen, die für alle Benutzer identisch sind, zum Beispiel den Namen des Systems oder die Uhrzeit. Andere Informationen sind aber spezifisch für den angemeldeten Benutzer (bzw. seiner Session), z. B. der Name des Benutzers, seine gewählte Sprache oder der Zugriffs-Schutz-Level. Diese System-Tags haben eine auf die Session bezogene spezifische Gültigkeit und Sichtbarkeit (sind also Session-lokal) und sind oft aus Benutzersicht "read only". System Tags können also verwendet werden, um benutzerspezifische Informationen in der Benutzeroberfläche eines SCADA-Systems oder anderer Einheiten anzuzeigen.

Werte, die spezifisch für einen Benutzer, also lokal verfügbar sein sollen, können in gebräuchlichen Systemen bereits auf unterschiedliche Weise erzeugt werden. Es ist beispielsweise möglich, die Benutzeroberfläche nicht über "Tags" auszusteuern, sondern über Skripte. Die lokalen Werte werden dann in lokalen Skript-Variablen geführt. Allerdings ist von Nachteil, dass solche lokalen Variablen nicht direkt in Screens projektiert verschaltet und angezeigt werden können, was die Verwendung von skript-lokalen Variablen einschränkt bzw. umständlich macht. Eine weitere Möglichkeit besteht darin, dass dynamisch und programmgesteuert (also zur Laufzeit) globale Tags angelegt werden, wobei dann über ein komplexes Namensschema scheinbar die Gültigkeit und die Sichtbarkeit (scope) dieser Tags gesteuert wird. Lesen oder Schreiben in den globalen Bereich der Tags geschieht dann im Bedarfsfall bei einer Anwenderaktion durch Skripte, wobei durch die Skripte dann die entsprechenden Daten in die globalen Tags geschrieben oder aus diesen ausgelesen werden. Diese Lösungen sind insoweit nachteilig, als der Projektierer das System nicht durch Konfiguration, sondern durch Programmierung erstellen muss, was grundsätzlich aufwendiger in der Erstellung ist und bei der Wartung und Pflege eines Systems erhöhten Aufwand nach sich zieht. Zudem wird durch ein solches Vorgehen der Variablenhaushalt eines Systems unnötig aufgebläht.

Es ist dabei eine Aufgabe der vorliegenden Erfindung, die Verwaltung von Variablen für die Datenhaltung und den Datenaustausch innerhalb der SCADA, HMI- und anderen Bedien- und Beobachtungssysteme zu vereinfachen.

Es hat sich dabei herausgestellt, dass es in manchen Anwendungsfällen hilfreich wäre, wenn ein Benutzer projektierte lokale Tags anlegen könnte oder solche für einen Benutzer spezifisch vorgesehen werden. Solche Tags sollen beispielsweise nur für eine bestimmte Session oder für einen benutzten lokalen Fokus (scope) definiert sein. Dies wird jedoch von den bekannten HMI/SCADA-Systemen derzeit nicht in einfacher und natürlicher Weise unterstützt. Solche lokalen Tags können z.B. sinnvoll sein, wenn die Ansteuerung der Benutzeroberfläche für einen bestimmten Anwender zentral umschaltbar ist, z. B. in einen Experten-Modus, bei dem zusätzliche Elemente für jedes Bedienbild (Screen) sichtbar werden. Der Zustand (Wert) dieser Einstellung, also dieses "Tags", ist dann gültig über alle Bedienbilder (Screens) dieses Benutzers, aber nicht für andere Screens oder andere Benutzer. Jeder Benutzer hat damit seinen "eigenen" Wert, den er unabhängig von den Werten anderer Benutzer steuern kann.

Es ist eine Kernidee der erfindungsgemäßen Lösung dieser Aufgabe, dass neben den gebräuchlichen globalen Tags auch Tags eines zweiten, "lokalen" Typs definiert werden können; der "Typ" bezieht sich dabei nicht auf einen Datentyp, sondern auf einen Typ im Sinne eines Gültigkeitsbereiches wie "lokal" oder "global" (scope). Bei der Definition eines Tags wird durch den Projektierer direkt angegeben, ob ein Tag global sein soll oder ob es ein "lokales Tag" sein soll. Weiterhin kann der Projektierer auch angeben, welchen Gültigkeitsbereich (scope) dieses Tag haben soll. Beispielsweise können die lokalen Tags ihren scope auf einen Screen oder ein Faceplate beschränken, wobei der Wert eindeutig innerhalb einer Benutzersession ist. Ein lokales Tag kann auch einen einheitlichen Gültigkeitsbereich beschränkt für einen Screen haben, dann gilt der Wert eindeutig innerhalb eines Bedienbildes (Screens) einer Benutzersession. Ein weiterer möglicher scope ist ein Faceplate, dann gilt der Wert eindeutig innerhalb eines Faceplates einer Benutzersession. Vorteilhaft sind die scopes ineinander geschachtelt. In einem (globalen) SCADA-System gibt es beispielsweise mehrere client-Rechner, auf einem client-Rechner jeweils mehrere Benutzersessions, ein Benutzer hat möglicherweise viele Screens offen, und pro Screen kann es in der Regel mehrere Faceplates geben.

Es ist zu beachten, dass die Definition des lokalen Tags global ist, damit das lokale Tag für alle Benutzer, Einheiten, lokale Einheiten, Screens etc. genau so einfach zu verwenden ist, wie jedes andere Tag (globale Tags) auch. Der aktuelle Wert dieses lokalen Tags ist allerdings auf den gewählten scope beschränkt, d.h. in jeder individuellen Ausprägung des scopes hat dieses Tag einen eigenständigen Wert und somit einen eigenen Speicher. Damit kommt ein und dasselbe projektierte lokale Tag zur Laufzeit des Systems in vielen eigenständigen "Kopien" vor, obwohl es global definiert ist. D.h., dass ein global definiertes, lokales Tag mehrere Instanzen haben kann.

Die Aufgabe wird insbesondere durch ein Verfahren gemäß dem Patentanspruch 1 und durch eine Anordnung gemäß dem Patentanspruch 9 gelöst.

Dabei ist ein Verfahren zur Verwaltung einer Variablen, eines sogenannten "Tags", für eine Bedien- und Beobachtungsebene einer industrielle Automatisierungsanordnung, vorgesehen, wobei die Bedien- und Beobachtungsebene eine Mehrzahl lokaler Einheiten, insbesondere Bediengeräte, Beobachtungsgeräte, Bedienbilder und Bedienelemente, aufweist, und wobei Variablen eines ersten globalen Typs ("globaler Tag") verwendet werden, wobei diese Variablen des ersten globalen Typs global für alle lokalen Einheiten definiert sind und für alle lokalen Einheiten jeweils denselben Wert aufweisen. Dabei wird eine Variable eines zweiten lokalen Typs ("lokaler Tag") definiert, wobei diese Variable des zweiten lokalen Typs global für alle lokalen Einheiten definiert wird und für einige oder alle lokalen Einheiten jeweils separate Werte aufweist, also jeweils einen eigenen "scope" hat. Mit einer solchen Anordnung kann ein Projektierer oder Programmierer somit in der ihm bekannten "Welt" der Tags weiterarbeiten und die Benutzeroberflächen durch den Einsatz von Tags erstellen, anstatt eine alternative Erstellung der Lösung über den aufwendigen Einsatz von Skripten oder dgl. vornehmen zu müssen. Gleichzeitig ist es aber möglich, in verschiedenen lokalen Einheiten unterschiedliche Werte oder Zustände einer solchen Variablen des zweiten Typs zu haben.

Die Aufgabe wird außerdem durch ein industrielles Bedien- und Beobachtungssystem mit einer Mehrzahl lokaler Einheiten, insbesondere Bediengeräte, Beobachtungsgeräte, Bedienbilder und Bedienelemente, gelöst, wobei Variablen eines ersten globalen Typs definiert sind, wobei diese Variablen des ersten globalen Typs global für alle lokalen Einheiten definiert sind und für alle lokalen Einheiten jeweils denselben Wert aufweisen. Dabei ist eine Variable eines zweiten lokalen Typs definiert, wobei diese Variable des zweiten lokalen Typs global für alle lokalen Einheiten definiert ist und jeweils für eine Anzahl der lokalen Einheiten separate Werte aufweist. Durch diese Automatisierungsanordnung können die Vorteile realisiert werden, die bereits anhand des Verfahrens diskutiert wurden.

Vorteilhafte Ausgestaltungen sind in den abhängigen Patentansprüchen angegeben, wobei die genannten Merkmale und deren Vorteile sowohl einzeln, als auch in Kombination miteinander realisiert werden können. Die vorteilhaften Ausgestaltungen des Verfahrens gelten sinngemäß auch für die industrielle Automatisierungsanordnung, und umgekehrt.

In einer Ausgestaltung wird eine Variable des zweiten lokalen Typs aus einer Variablen des ersten globalen Typs initialisiert, wobei ein jeweiliger Wert der Variablen des ersten globalen Typs einer Variablen des zweiten lokalen Typs für einen jeweiligen Gültigkeitsbereich zugewiesen wird. Dadurch ist eine einfache Vorbelegung der lokalen Variablen möglich. Umgekehrt kann ebenso vorteilhaft ein Wert einer Variablen des zweiten lokalen Typs einer Variablen des ersten globalen Typs zugewiesen werden, also beispielsweise ein "zurückschreiben" erfolgen. Dabei wird vorteilhaft in dem Fall, in dem ursprünglich die Variable des zweiten lokalen Typs aus der Variablen des ersten globalen Typs initialisiert wurde, vor der Zuweisung geprüft, ob der Wert der Variablen des ersten globalen Typs nach der Initialisierung geändert wurde. Somit werden inkonsistente Zustände, die bei konkurrierenden Änderungen durch mehrere Benutzer oder andere Umstände auftreten können, erkannt.

Vorteilhaft kann die Variable des zweiten lokalen Typs in unterschiedlichen Gültigkeitsbereichen definiert werden, wobei in jedem der Gültigkeitsbereiche der Wert dieser Variablen des zweiten lokalen Typs einheitlich ist. Somit kann eine Variable des zweiten Typs in den verschiedenen Gültigkeitsbereichen denselben Bezeichner oder Namen haben.

Vorteilhaft können eine Variable des ersten globalen Typs und eine Variable des zweiten lokalen Typs als ein Variablen-Paar verwaltet werden. Dabei kann für ein Variablen-Paar aus Variablen des ersten globalen Typs und Variablen des zweiten lokalen Typs eine temporäre Kopplung eingerichtet werden, wobei für die Dauer der temporären Kopplung eine Zuweisung eines Wertes zu der Variablen des zweiten lokalen Typs dieser Wert auch der Variablen des ersten globalen Typs automatisch zugewiesen wird, und umgekehrt. Variablen eines Variablen-Paars sollen jeweils denselben oder einen kompatiblen Datentyp aufweisen. Für den Fall, dass eine Variable des zweiten lokalen Typs mehrfach instanziiert ist, kann die Kopplung für eine, mehrere oder alle Instanzen unabhängig voneinander eingestellt werden.

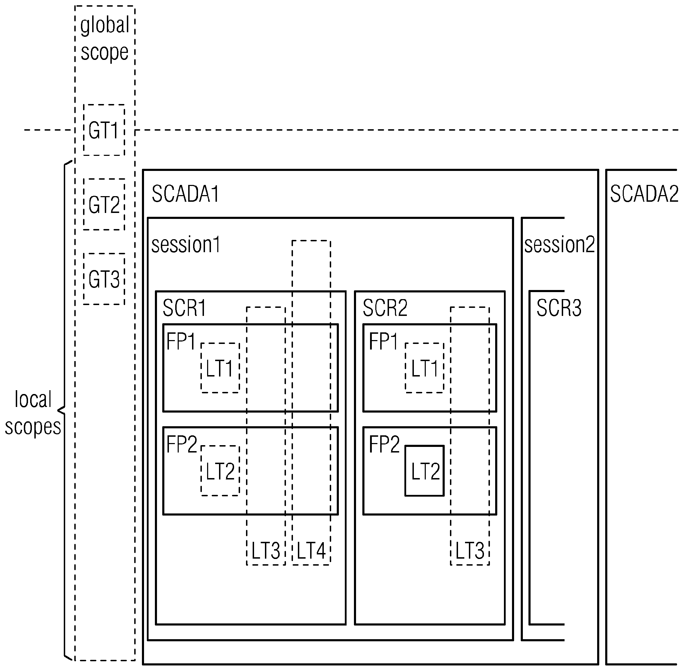

Ein Ausführungsbeispiel eines erfindungsgemäßen Verfahrens und einer erfindungsgemäßen industriellen Automatisierungsanordnung wird nachfolgend anhand der Zeichnung erläutert.

Dabei zeigt die einzige Figur in schematischer Darstellung die verschiedenen Gültigkeitsbereiche von globalen und lokalen Tags am Beispiel einer Anordnung aus einem SCADA-System mit unterschiedlichen Screens und Faceplates.

Im Folgenden wird anhand der Figur die Dualität, also das Nebeneinander zwischen globalen Tags und lokalen Tags erläutert. Die globalen Tags GT1, ..., GT3 haben für alle lokalen Einheiten, also auch für die SCADA-Systeme SCADA1, SCADA2, die darin ablaufenden benutzerbezogenen Sitzungen session1, session2, die darin angezeigten Bedienbilder SCR1, SCR2 ("Screens") und die darin gezeigten Geräteansichten FP1,FP2 jeweils denselben Wert; man sagt auch, die globalen Tags GT1, ..., GT3 haben einen "globalen scope" oder "globalen Gültigkeitsbereich". Diese globalen Tags GT1, ..., GT3 können beispielsweise an sog. I/O-Variablen einer Speicherprogrammierbaren Steuerung (PLC) angebunden sein und Sensorwerte oder Aktorwerte repräsentieren. Alle lokalen Einheiten SCADA1, SCADA2 und deren jeweiligen lokalen Untereinheiten können, je nach eingestellter (projektierter) Berechtigung die Tags GT1, ..., GT3 entweder nur lesen, oder auch beschreiben.

Im Folgenden soll als eine lokale Einheit das SCADA-System SCADA1 betrachtet werden. Auf diesem System seien gleichzeitig zwei Benutzer mit je einer der Sitzungen session1, session2 angemeldet; davon betrachtet wird nun session1.

In der session1 sei nun exemplarisch eine Variable LT4 betrachtet. Diese ist eine zwar global definierte Variable (Tag) mit jedoch einem lokalen "scope", also einem begrenzten Gültigkeitsbereich. Dieser "scope" ist hier die session1, d.h., dass diese Variable LT4 für alle lokalen Einheiten der session1, also die Screens SCR1, SCR2 und die darin instanziierten Faceplates FP1, FP2 zugreifbar ist und dort einen einheitlichen Wert hat. Beispielsweise kann die Variable LT4 die Information "Benutzersprache: Deutsch" speichern, womit der Benutzer der session1 also in deutscher Sprache arbeitet, womit alle Ausgaben auf Bildschirmen auf Deutsch erfolgen. In der Sitzung session2 kann auch die gleiche Variable LT4 verwendet werden, jedoch im "scope" der session2 einen anderen Wert (Inhalt), z.B. "Benutzersprache: Englisch". Beide Instanzen haben im Gesamtsystem denselben Namen bzw. Bezeichner. Die Variable bzw. der Tag LT4 ist in allen Untereinheiten der Sitzung session1 sichtbar und zugreifbar und hat in diesen überall denselben Wert.

In beiden Screens SCR1, SCR2 sind jeweils dieselben industriellen Geräte mittels sog. Faceplates FP1, FP2 dargestellt und zu diesem Zweck "instanziiert", beispielsweise FP1 für die Anzeige des Füllstands eines Kessels und FP2 für die Steuerung eines Ventils. Die Daten (Werte) für den Füllstand des Kessels oder den Zustand (offen, geschlossen) des Ventils werden in lokalen Variablen, also den Tags LT1, LT2 gehalten. Diese können an entsprechende globale Tags GT1, ..., GT3 angekoppelt werden, um jeweils von verschiedenen oder auch denselben Kesseln und Ventilen die Zustände anzuzeigen und ggf. zu steuern. Die Tags LT1, LT2 haben also in jedem der Faceplates FP1, FP2 in jedem der Screens SCR1, SCR2 einen eigenen Speicher und möglicherweise voneinander abweichende Werte. So kann beispielsweise der Tag LT2, der in Screen SCR2 den Status eines Ventils in der Darstellung des Faceplates FP2 repräsentiert und bei einer Benutzeraktion auch ändern kann, temporär von seinem globalen "Counterpart" (z.B. GT3) entkoppelt werden. Der Benutzer der Sitzung session2 kann dann Eingaben machen etc., die erst bei einer Produktivschaltung in den realen Betrieb übernommen werden sollen. Hat der Benutzer also den Status des Ventils während der Entkopplung geändert, z.B. von "offen" auf "geschlossen", passiert erst einmal in der angeschlossenen Steuerung gar nichts, lediglich der Inhalt der lokalen Variablen LT2 der Instanz im Screen SCR2 ändert sich. Erst mit erneuter Kopplung wird der neue Zustand "geschlossen" in die globale Variable GT3 übernommen und in die PLC "zurückgeschrieben". Sofern das Faceplate FP2 in dem "benachbarten" Screen SCR1 dasselbe Ventil betrifft, schaltet sich dort auch mit Übernahme des Inhalts von GT3 in die dortige Instanz der Variablen LT2 die Ansicht um, d.h., es wird ein geöffnetes Ventil dargestellt.

Andere Beispiele für lokale Variablen sind hier die Tags LT3, die auch in beiden Screens SCR1, SCR2 denselben Namen (Bezeichner) haben. Deren "scope" ist jeweils der betreffende Screen SCR1, SCR2 und kann beispielsweise ein Zoom-Faktor der Darstellung des jeweiligen Screens betreffen, der dann für alle lokalen Einheiten (Faceplates, Texte, Bilder und andere GUI-Elemente) der Screens SCR1, SCR2 jeweils einheitlich ist, also im vorliegenden Beispiel für die Faceplates FP1, FP2 des jeweiligen Screens SCR1, SCR2, nicht jedoch für Screens der Sitzung session2, die einen anderen Zoom-Faktor haben können.

Es ist wichtig, dass zum Beispiel das Faceplate FP1 zweimal instanziiert ist (einmal im Screen SCR1, einmal im Screen SCR2). Die lokale Variable, die den Füllstand des Kessels als Wert repräsentiert (z.B. ein Wert zwischen 0% und 100%), ist global definiert und hat beispielsweise einen einheitlichen Bezeichner, z.B. "Faceplate_kessel_charge". Dieser einheitliche Bezeichner wird dann während der Projektierung an eine globale Variable, z.B. GT2 für den Kesselfüllstand, gebunden; faktisch sind aber zwei unterschiedliche lokale Instanzen an denselben globalen Tag GT2 geknüpft worden. In der Figur hat diese lokale Variable "Faceplate_kessel_charge" aber daher ein identisches Bezugszeichen LT1, obwohl die Variable in jedem ihrer scopes (FP1 von SCR1, FP1 von SCR2) eine eigene Instanz und somit voneinander unabhängige Speicherzellen aufweist. Wird jetzt von einer übergeordneten Ebene, beispielsweise bei einer Änderung des Wertes in der globalen Variablen GT2, der Wert der lokalen Variablen "Faceplate_kessel_charge" geändert, überträgt sich das durch die im unterlagerten Runtime-System angelegte Verknüpfung sogleich in die lokalen Instanzen LT1 der beiden Screens SCR1, SCR2, es sei denn, die Verknüpfung wurde temporär "entkoppelt", was jedoch bei der Darstellung von Sensorwerten weniger Sinn ergeben mag, als bei der Entkopplung von Aktoren (siehe FP2). Die scopes der Tags orientieren sich vorteilhaft an der Hierarchie der "UI-Elemente" (User Interface), wodurch sich auch die Berechtigungen (insbesondere für schreibenden Zugriff, aber auch für die "Sichtbarkeit") entsprechend automatisch ergeben können.

Es ist möglich, dass die Verknüpfung bzw. Kopplung der lokalen Tags an die globalen Tags schon mittels der Projektierung im Runtime-System angelegt wird und zur Laufzeit im Hintergrund stets eine Synchronisierung der jeweiligen "Variablen-Paare" automatisch erfolgt, so dass dies durch eine Anwendung nicht explizit geleistet werden muss, beispielsweise über Scripte oder Zuweisungsoperationen. Dies ist insbesondere dann von Vorteil, wenn dieselbe "physikalische Welt" in verschiedenen Bedienstationen dargestellt und manipuliert wird, weil der Programmieraufwand und damit auch die Fehleranfälligkeit signifikant sinkt.

Das in der Figur gezeigte System kann in einem anderen Beispiel ein Teil einer industriellen Automatisierungsanordnung der Prozessindustrie sein, wo mittels einer sogenannten "Rezeptur" ein Produkt hergestellt werden soll, beispielsweise ein Arzneimittel. Der industrielle Prozess wird durch speicherprogrammierbare Steuerungen (nicht dargestellt) gesteuert, an die (nicht dargestellt) Sensoren und Aktoren angeschlossen sind. Bedient und beobachtet wird das System durch zwei SCADA-Systeme SCADA1, SCADA2 Die komplette Fertigung wird durch die HMI-Geräte, ein MES-System und durch die SCADA-Systeme SCADA1, SCADA2 überwacht und gesteuert. Die letztgenannten Einheiten halten ihre gemeinsamen Daten mittels sogenannter "Tags", also globaler Variablen GT1, GT2, GT3 ("Globale Tags") eines ersten Typs. In solchen "Tags" sind in diesem Beispiel die Rezeptur gespeichert, wobei also die Tags Werte enthalten, die definieren, wie viel wann von welcher Substanz dem Produkt beigegeben wird, wann und wie stark welches Produkt oder welche Substanz erhitzt wird usw.

Ein Rezept oder eine Rezeptur wird in der Regel durch einen strukturierten Tag dargestellt, der viele Komponenten enthält. Diese Komponenten stellen die einzelnen Schritte oder Bestandteile des Rezeptes sowie die Parameter dieser Schritte dar. Alle diese Komponenten in einem einzigen Bedienbild anzuzeigen funktioniert oft nicht aus Mengengründen. Weiterhin möchte man diese Anteile des Rezeptes in unterschiedlichen Bedienbildern bearbeiten, abhängig von ihrer logischen Gruppierung, Änderungshäufigkeit oder auch Zugriffsberechtigung. Die gesamten Daten des Rezeptes sind dann erst am Ende einer längeren Bedienhandlung wieder konsistent und dürfen erst zu diesem Zeitpunkt in die globale für alle sichtbare Datenhaltung und/oder direkt in die Steuerung übertragen werden. Daher werden die Daten, also das "Rezept", in solchen Fällen temporär in den lokalen Einheiten in global definierten, lokalen Tags, also Variablen eines zweiten lokalen Typs, gehalten. Erst zu dem Zeitpunkt am Ende der längeren Bedienhandlung erfolgt dann die Rückübertragung der zwischenzeitlich bearbeiteten Daten in die globalen Tags, also die Variablen des ersten globalen Typs.

Aus Sicht des Projektierers besteht der Vorteil der Lösung darin, dass er in der ihm bekannten "Welt" der Tags bleibt, und das UI (user interface) durch den Einsatz von Tags erstellen kann, anstatt auf eine alternative Erstellung der Lösung über den aufwändigeren Einsatz von Scripting zu wechseln. Der Zustand (Speicher) für benutzerspezifische Aktionen wird zentral als Tag, also Variable des zweiten lokalen Typs, projektiert, mit vielen vom gebräuchlichen Tag (Globale Variable des ersten Typs) bekannten Eigenschaften wie z.B. Typ, Initialwert, Grenzwerte etc.

Die Verwendung dieses Zustandes wird in UI Komponenten (Textfeld, Drop-Down-Menu, Faceplate, ...) genauso einfach (z.B. ohne Script) verwendet wie die globalen Tags, die den globalen Zustand aus dem Prozess beschreiben. Die Eingabe eines solchen Wertes kann über Standard UI Komponenten (z.B. Inputfield) erfolgen, die nun aber mit diesen lokalen Tags verbunden werden. Ein weiterer Vorteil besteht darin, dass auch Applikationen mittels "SCADA UI" leichter erstellt werden können, die über viele Schritte hinweg in einem vom Prozess und von anderen Anwendern isoliertem Modus arbeiten können. Dies ist ein Workflow, der aus Office-Systemen geläufig ist, dort wird z.B. mittels eines Editors ein Dokument erstellt, und erst wenn es fertig ist, wird es veröffentlicht.

Weiterhin ist es vorteilhaft, wenn lokale Tags mit globalen Tags temporär gekoppelt werden können. Auf diese Weise können Use-Cases gelöst werden, die zwischen Offline/Online Modus leicht wechseln.

Eine solche Anwendung stellt z.B. das interaktive Optimieren einer Rezeptur dar. Das Tag, welches die Daten des Rezeptes enthält, wird auf die Steuerung übertragen, wo das Rezept in einer Datenstruktur der Steuerung gespeichert wird, die wiederum durch ein globales Tag (Variable des ersten globalen Typs) im SCADA System für alle verfügbar ist. Wird nun ein lokales Tag (Variable des zweiten lokalen Typs) mit diesem globalen Tag verbunden, dann gehen alle Änderungen von Komponenten dieser Struktur sofort in die Steuerung über, werden also in den globalen Tag übernommen. So kann z.B. die Rührgeschwindigkeit interaktiv in einem "teach-in" Verfahren direkt am Prozess eingestellt werden. Ist man mit der Einstellung fertig, entkoppelt man das lokale Tag wieder, und kann das so optimierte Rezept in der globalen Datenhaltung speichern.

Aus Sicht eines Herstellers von Automatisierungssystemen trägt dieses Konzept zu einer Weiterentwicklung des "SCADA UI" von einer globalen Anzeige/Bedienstation zu einer komplexen Applikationsumgebung in der Anwendung mit benutzerspezifisch zustandsbehafteter Steuerung bei, wobei auf einfache Weise Benutzerführungen wie geführte "Wizzards" verwaltet werden können und Applikationen einfacher individualisiert und angepasst werden können.

Lokale Tags, also Variablen des zweiten lokalen Typs, können vorteilhaft gelesen werden (aus UI Elementen verschaltet oder aus Script), geschrieben werden (aus UI Elementen verschaltet oder aus Script), aus einem globalen Tag initialisiert werden (Script), in ein globales Tag geschrieben werden (Script), in ein globales Tag nach erfolgreicher Prüfung des ursprünglichen Wertes geschrieben werden (Script), mit einem globalen Tag verbunden (gekoppelt) werden (Script), oder von einem verbundenen globalen Tag getrennt (entkoppelt) werden (Script). Vorteilhaft stellt eine Programmierumgebung und ein HMI-Runtime-System dafür passende Funktionen bereit, die den Umgang mit globalen und mit lokalen Tags erleichtern. Dadurch können lokale Tags auf einfache Weise aus den globalen Werten initialisiert werden, und nach einer Eingabe oder Bearbeitung auch einfach in die globalen Werte im physikalischen Prozess übertragen werden. Weiterhin können lokale Tags durch Kopplung an globale Tags temporär und benutzergesteuert für "on-line"-Modi oder "teach-in"-Modi verwendet werden.

Lokale Tags sind z.B. sinnvoll, wenn die Ansteuerung des UI für diesen einen Anwender zentral umschaltbar ist, z.B. in einen Experten-Modus, bei dem zusätzliche Elemente pro Screen sichtbar werden. Der Zustand (Wert) dieser Einstellung (Tag) ist gültig über alle Bedienbilder (Screens) dieses Benutzers, aber nicht für andere Benutzer. Jeder Benutzer hat damit "seinen" Wert, den er unabhängig von den Werten anderer Benutzer steuern kann.

Lokale Tags sind auch dann nützlich, wenn z.B. über mehrere Formulare (Screens) hinweg Werte zu setzen sind, die aber - solange der Anwender damit nicht fertig ist - nicht global für andere Benutzer sichtbar sein sollen (z.B. Editor für Rezepte und Parameter Datensätze) oder "produktiv" geschaltet werden sollen. Vorteilhaft ist auch die einfache Möglichkeit, diese lokalen Tags aus globalen Tags zu initialisieren bzw. nach Veränderung wieder in globale Tags zu übertragen.

Weitere Anwendungsfälle stellen indirekte Tags und Multiplex-Tags dar. Der Benutzer wählt über einen Namen (bei indirekten Tags) oder den Index-Tag (Sekundant des Multiplex-Tag) aus, welcher globale Tag angesprochen werden soll. Sind Index und Multiplex Tag global, dann ist diese Aktion für alle Benutzer sofort sichtbar und verkoppelt. Ein lokales, entkoppeltes Arbeiten eines Benutzers ist damit nicht mehr möglich. Erst durch die Kombination der Konzepte der indirekten bzw. der Multiplex-Tags mit der Eigenschaft der Lokalität innerhalb der User Session kann die Funktionalität ohne unerwünschte Wechselwirkung auf den einzelnen Benutzer bezogen verwendet werden.

## Patentansprüche

1. Verfahren zur Verwaltung einer Variablen für eine Bedien- und Beobachtungsebene einer industriellen Automatisierungsanordnung,
wobei die Bedien- und Beobachtungsebene eine Mehrzahl lokaler Einheiten (SCADA1, SCADA2, session1, session2, SCR1, SCR2, FP1, FP2), insbesondere Bedien- und Beobachtungsgeräte (SCADA1, SCADA2), Bedienbilder (SCR1, SCR2) und Bedienelemente (FP1, FP2), aufweist,
wobei Variablen (GT1, ..., GT3) eines ersten globalen Typs verwendet werden,
wobei diese Variablen des ersten globalen Typs (GT1, ..., GT3) global für alle lokalen Einheiten (SCADA1, SCADA2, session1, session2, SCR1, SCR2, FP1, FP2) definiert sind und für alle lokalen Einheiten (SCADA1, SCADA2, session1, session2, SCR1, SCR2, FP1, FP2) jeweils denselben Wert aufweisen,
**dadurch gekennzeichnet,**
**dass** eine Variable (LT1, ..., LT4) eines zweiten lokalen Typs definiert wird, wobei diese Variable (LT1, ..., LT4) des zweiten lokalen Typs global für alle lokalen Einheiten (SCADA1, SCADA2, session1, session2, SCR1, SCR2, FP1, FP2) definiert wird und für einige oder alle lokalen Einheiten (SCADA1, SCADA2, session1, session2, SCR1, SCR2, FP1, FP2) jeweils separate Werte aufweist.

2. Verfahren nach Patentanspruch 1,
**dadurch gekennzeichnet,**
**dass** eine Variable (LT1, ..., LT4) des zweiten lokalen Typs aus einer Variablen (GT1, ..., GT3) des ersten globalen Typs initialisiert wird, wobei ein jeweiliger Wert der Variablen (GT1, ..., GT3) des ersten globalen Typs der Variablen (LT1, ..., LT4) des zweiten lokalen Typs für ihren jeweiligen Gültigkeitsbereich zugewiesen wird,
wobei die Variable (LT1, ..., LT4) des zweiten lokalen Typs eine Anzahl verschiedener Gültigkeitsbereiche aufweist, wobei in jedem der Gültigkeitsbereiche der Wert dieser Variablen (LT1, ..., LT4) des zweiten lokalen Typs einheitlich ist.

3. Verfahren nach einem der vorhergehenden Patentansprüche,
**dadurch gekennzeichnet,**
**dass** ein Wert einer Variablen (LT1, ..., LT4) des zweiten lokalen Typs einer Variablen (GT1, ..., GT3) des ersten globalen Typs zugewiesen wird.

4. Verfahren nach Patentanspruch 3,
**dadurch gekennzeichnet,**
**dass** in dem Fall, in dem die Variable (LT1, ..., LT4) des zweiten lokalen Typs ursprünglich aus der Variablen (GT1, ..., GT3) des ersten globalen Typs initialisiert wurde, vor der Zuweisung geprüft wird, ob der Wert der Variablen (GT1, ..., GT3) des ersten globalen Typs nach der Initialisierung geändert wurde.

5. Verfahren nach einem der vorhergehenden Patentansprüche,
**dadurch gekennzeichnet,**
**dass** eine Variable (GT1, ..., GT3) des ersten globalen Typs und eine Variable (LT1, ..., LT4) des zweiten lokalen Typs als ein Variablen-Paar verwaltet werden.

6. Verfahren nach Patentanspruch 5,
**dadurch gekennzeichnet,**
**dass** für ein Variablen-Paar Variablen (GT1, ..., GT3) des ersten globalen Typs und Variablen (LT1, ..., LT4) des zweiten lokalen Typs eine temporäre Kopplung eingerichtet wird,
wobei für die Dauer der temporären Kopplung eine Zuweisung eines Wertes zu der Variablen (LT1, ..., LT4) des zweiten lokalen Typs dieser Wert auch der Variablen (GT1, ..., GT3) des ersten globalen Typs automatisch zugewiesen wird, und umgekehrt.

7. Verfahren nach einem der Patentansprüche 5 oder 6,
**dadurch gekennzeichnet,**
**dass** Variablen (GT1, ..., GT3; LT1, ..., LT4) eines Variablen-Paars denselben oder einen kompatiblen Datentyp aufweisen.

8. Verfahren nach Patentanspruch 6 oder 7,
**dadurch gekennzeichnet,**
**dass** für den Fall, dass eine Variable (LT1, ..., LT4) des zweiten lokalen Typs eine Mehrzahl Instanzen aufweist, die Kopplung für eine, mehrere oder alle Instanzen unabhängig voneinander eingestellt wird.

9. Industrielle Automatisierungsanordnung, insbesondere eine industrielles Bedien- und Beobachtungssystem,
wobei das industrielle Bedien- und Beobachtungssystem eine Mehrzahl lokaler Einheiten (SCADA1, SCADA2, session1, session2, SCR1, SCR2, FP1, FP2), insbesondere Bedien- und Beobachtungsgeräte (SCADA1, SCADA2), Bedienbilder (SCR1, SCR2) und Bedienelemente (FP1, FP2), aufweist,
wobei Variablen (GT1, ..., GT3) eines ersten globalen Typs definiert sind, wobei diese Variablen (GT1, ..., GT3) des ersten globalen Typs global für alle lokalen Einheiten (SCADA1, SCADA2, session1, session2, SCR1, SCR2, FP1, FP2) definiert sind und für alle lokalen Einheiten (SCADA1, SCADA2, session1, session2, SCR1, SCR2, FP1, FP2) jeweils denselben Wert aufweisen,
**dadurch gekennzeichnet,**
**dass** eine Variable (LT1, ..., LT4) eines zweiten lokalen Typs definiert ist, wobei diese Variable (LT1, ..., LT4) des zweiten lokalen Typs global für alle lokalen Einheiten (SCADA1, SCADA2, session1, session2, SCR1, SCR2, FP1, FP2) definiert ist und jeweils für einige oder alle lokalen Einheiten (SCADA1, SCADA2, session1, session2, SCR1, SCR2, FP1, FP2) separate Werte aufweist.

10. Industrielle Automatisierungsanordnung nach Patentanspruch 9,
**dadurch gekennzeichnet,**
**dass** vorgesehen ist, dass eine Variable (LT1, ..., LT4) des zweiten lokalen Typs aus einer Variablen (GT1, ..., GT3) des ersten globalen Typs initialisiert wird, wobei ein jeweiliger Wert der Variablen (GT1, ..., GT3) des ersten globalen Typs einer Variablen (LT1, ..., LT4) des zweiten lokalen Typs für einen jeweiligen Gültigkeitsbereich zugewiesen wird,
wobei die Variable (LT1, ..., LT4) des zweiten lokalen Typs eine Anzahl Gültigkeitsbereiche aufweist, wobei in jedem der Gültigkeitsbereiche der Wert dieser Variablen (LT1, ..., LT4) des zweiten lokalen Typs einheitlich ist und ein jeweiliger Gültigkeitsbereich für eine Anzahl der lokalen Einheiten (SCADA1, SCADA2, session1, session2, SCR1, SCR2, FP1, FP2) definiert ist.

11. Industrielle Automatisierungsanordnung nach Patentanspruch 9,
**dadurch gekennzeichnet,**
**dass** vorgesehen ist, einen Wert einer Variablen (LT1, ..., LT4) des zweiten lokalen Typs einer Variablen (GT1, ..., GT3) des ersten globalen Typs zuzuweisen.

12. Industrielle Automatisierungsanordnung nach Patentanspruch 9,
**dadurch gekennzeichnet,**
**dass** in dem Fall, in dem die Variable (LT1, ..., LT4) des zweiten lokalen Typs aus der Variablen (GT1, ..., GT3) des ersten globalen Typs initialisiert wurde, vorgesehen ist, vor der Zuweisung zu überprüfen, ob der Wert der Variablen (GT1, ..., GT3) des ersten globalen Typs nach der Initialisierung geändert wurde.

13. Industrielle Automatisierungsanordnung nach Patentanspruch 9,
**dadurch gekennzeichnet,**
**dass** vorgesehen ist, eine Variable (GT1, ..., GT3) des ersten globalen Typs und eine Variable (LT1, ..., LT4) des zweiten lokalen Typs als ein Variablen-Paar zu verwalten.

14. Industrielle Automatisierungsanordnung nach Patentanspruch 9,
**dadurch gekennzeichnet,**
**dass** für ein Variablen-Paar Variablen (GT1, ..., GT3) des ersten globalen Typs und Variablen (LT1, ..., LT4) des zweiten lokalen Typs eine temporäre Kopplung vorgesehen ist,
wobei für die Dauer der temporären Kopplung eine Zuweisung eines Wertes zu der Variablen (LT1, ..., LT4) des zweiten lokalen Typs dieser Wert auch der Variablen (GT1, ..., GT3) des ersten globalen Typs automatisch zugewiesen wird und umgekehrt.

15. Industrielle Automatisierungsanordnung nach Patentanspruch 9,
**dadurch gekennzeichnet,**
**dass** Variablen (GT1, ..., GT3; LT1, ..., LT4) eines Variablen-Paars denselben oder einen kompatiblen Datentyp aufweisen.

16. Industrielle Automatisierungsanordnung nach Patentanspruch 9,
**dadurch gekennzeichnet,**
**dass** für den Fall, dass eine Variable (LT1, ..., LT4) des zweiten lokalen Typs eine Mehrzahl Instanzen aufweist, die Kopplung für eine, mehrere oder alle Instanzen unabhängig voneinander eingestellt ist.
